# EUROPEAN PATENT APPLICATION

(11) **EP 3 453 442 A1**
(43) Date of publication of application: **13.03.2019**
(21) Application number: 17190116.8
(22) Date of filing: 08.09.2017
(51) Int. Cl.: B01D 46/00, B01D 46/10, B01D 46/44, F02M 35/024

(54) **FILTER HOUSING**

(71) Applicant: Mahle International GmbH, 70376 Stuttgart (DE)
(72) Inventor: CUNNINGHAM, John, Muxton Telford, Shropshire TF2 8SZ (GB); SENTANCE, Graham, Grimley, Worc, Worcestershire WR2 6LX (GB)
(74) Representative: BRP Renaud & Partner mbB Rechtsanwälte Patentanwälte Steuerberater

(57) **Abstract**

The invention relates to a filter housing 1 with a filter element 2, which is arranged between at least one raw-air side inlet 3, 3' and at least two clean-air side outlets 4, 4' of the filter housing 1, and a clean-air space 5, which overlaps the filter element 2 and communicates with the clean-air side outlets 4, 4', and with at least one partition wall, which is arranged within the clean-air space 5 in such a way that the clean-air space 5 is divided into individual clean-air chambers 7, 7', at least one of which is assigned to a clean-air side outlet 4, 4', respectively. The invention also relates to a manufacturing method for such a filter housing 1 and its preferred use.

The essential feature of the invention is that stable air flow conditions can be achieved in case of cylinder cut-off.

## Description

The present invention relates to a filter housing according to Claim 1, to a manufacturing method for such a filter housing according to Claim 13, and to a preferred use of the filter housing according to Claim 15.

In the prior art, in the case of systems having a plurality of inlets or outlets, a plurality of filter elements which are separate from one another are also used.

Laid-open German patent application DE 10 2012 106 219 A1 thus presents an air filter with two clean-air regions, four filter elements and at least three raw-air regions, wherein the clean-air regions are each bounded by two filter elements, and wherein each of the filter elements delimits a clean-air region from a raw-air region, and the clean-air regions are each provided with a clean-air outlet and the raw-air regions are each provided with a raw-air inlet.

Laid-open German patent application DE 10 2004 036 083 A1 presents a suction device for an internal combustion engine, with an air filter element which, in its cross section through which the flow can pass, has at least two filter subregions having different flow resistance states.

However, the described technologies do not prevent a transverse air flow through the air filter if individual cylinders or entire cylinder banks are deactivated during operation of the engine. As a result, it is specifically not possible, however, for a MAF (Mass Air Flow) sensor signal to be kept stable. A solution to this problem which is structurally simple to implement under these circumstances and is, in addition, also easily producible and cost-effective is not known.

The above problems are solved according to the invention by the subject matter of independent Claims 1, 13 and 15. Advantageous embodiments are the subject matter of the dependent claims.

The present invention is based here on the general concept of stabilizing the flow conditions present in the filter housing in such a manner that a MAF sensor signal is not influenced even in the case of cut-off of entire cylinder banks. For this purpose, according to the invention, a filter housing is provided, with a filter element, which is arranged between at least one raw-air-side air inlet and at least two clean-air-side air outlets of the filter housing, and with a clean-air space, which overlaps the filter element and communicates with the clean-air-side air outlets, and with at least one partition wall, which is arranged within the clean-air space in such a way that the clean-air space is divided into individual clean-air chambers, at least one of which is assigned to a respective clean-air-side air outlet. By means of the partition wall, a transverse air flow is simply and reliably prevented here, and therefore, even in the event of cylinder cut-off, stable flow conditions and, as a result, also a stable MAF sensor signal are present.

In a preferred embodiment of the filter housing according to the invention, it is provided that the at least one partition wall is not manufactured integrally with the filter housing, and the filter housing can therefore be manufactured particularly simply, for example by injection moulding or deep drawing, without the casting or deep-drawing moulds required for this purpose needing substantial modifications. In particular, it is of advantage if the partition wall is insertable or pushable only retrospectively into the filter housing, which permits the particularly simple installation thereof on the filter housing.

In a further preferred embodiment of the filter housing according to the invention, it is provided that the filter housing has receptacles for fixing the at least one partition wall in a predetermined position on the filter housing. Corresponding receptacles can be attached particularly simply to the filter housing without fundamentally changing the manufacturing process of the latter. In particular, it is of advantage here if the receptacles are formed by projections and/or recesses since these require only slight modifications, but at the same time provide secure support. In the simplest embodiment, the receptacles are designed as holding ribs and/or holding grooves which also ensure reliable sealing.

In yet another preferred embodiment of the filter housing according to the invention, it is provided that intermeshing locking and/or holding elements are formed between the at least one partition wall and the filter housing. These holding elements already provide good positional securing of the partition wall against air pressure fluctuations in the clean-air space and/or vibrations of the filter housing, but said positional securing is made even more reliable by means of a corresponding lock. It is preferred here if the locking elements are configured as snap-action securing means, via which the partition wall can be mounted particularly simply on the filter housing.

In yet another preferred embodiment of the filter housing according to the invention, it is provided that a double sided adhesive fixing tape is arranged between the at least one partition wall and the filter housing. As a result, the partition wall can be simply mounted and stably attached to the filter housing. Additional receptacles for the partition wall on the filter housing can be, but do not have to be, provided here. Even the fixing tape by itself already provides good positional securing of the partition wall against air pressure fluctuations in the clean-air space and/or vibrations of the filter housing.

In yet another preferred embodiment of the filter housing according to the invention, it is provided that the at least one partition wall is heat-connected to the filter housing, which can likewise be undertaken only during the subsequent installation of the partition wall on the filter housing. Particularly appropriate here is ultrasonic welding and/or hot plugging together which can be carried out rapidly and simply and provides extremely reliable positional securing of the partition wall against air pressure fluctuations in the clean-air space and/or vibrations of the filter housing.

In yet another preferred embodiment of the filter housing according to the invention, it is provided that the at least one partition wall and/or the filter housing and/or the filter element are/is provided with a rubber seal. As a result, even the smallest transverse air flows beyond the partition wall are at least significantly minimized, if not completely prevented. In particular, however, a flow-induced production of noise, such as, for example, whistling, is also eliminated.

In yet another preferred embodiment of the filter housing according to the invention, it is provided that a soft pad is introduced between the at least one partition wall and the filter element. As a result, protection of the paper layers of the filer element against vibration of the partition wall is ensured, in addition a pressure resistance is built up to maintain a position of the partition wall and, furthermore, a seal for preventing whistling noises is produced. The soft pad may be made of rubber. It is in particular of advantage here if the soft pad is composed of a relatively cost-effective polyurethane foam which is easy to process.

In yet another preferred embodiment of the filter housing according to the invention, it is provided that the at least one partition wall has an encircling edge of T- or L-shaped design, as seen in cross section, in order to ensure greater transverse stability and therefore positioning stability.

In yet another preferred embodiment of the filter housing according to the invention, it is provided that the at least one partition wall is produced from a plastics material, which permits the cost-effective and simple manufacturing thereof, and also particularly simple welding or adhesive bonding to the filter housing, which is customarily manufactured from a plastics material.

The above problems are also solved by a manufacturing method for the filter housing described above, in which at least one partition wall is arranged in the clean-air space in such a manner that the clean-air space is divided into individual clean-air chambers, at least one of which is assigned to a respective clean-air-side air outlet. Simple and cost-effective manufacturing of the filter housing is therefore possible, said filter housing no longer permitting a transverse air flow and ensuring stable flow conditions in the case of cylinder cut-off, and therefore a MAF sensor signal remains stable.

In a preferred form of the manufacturing method according to the invention, it is provided that the at least one partition wall is insertable or pushable into the filter housing, which permits the simple installation and fixing thereof on the filter housing. In particular, it is of advantage if the partition wall is heated-connectable to the filter housing in order to reliably secure the position of said partition wall even in the event of severe vibrations.

Owing to the flow conditions being stable independently of the respective operating state of an engine, the above-described filter housing is intended to be used in a vehicle, preferably in a vehicle with an internal combustion engine.

Further important features and advantages of the invention emerge from the dependent claims, from the drawings and from the associated description of the figures with reference to the drawings.

It goes without saying that the features mentioned above and those which have yet to be explained below are usable not only in the respectively stated combination but also in other combinations or on their own without departing from the scope of the present invention.

A preferred exemplary embodiment of the invention is illustrated in the drawing and is explained in more detail in the description below, wherein the same reference numbers refer to identical or similar or functional identical components.

In the drawing, in each case schematically:
- Figure 1: shows a perspective view of a filter housing according to the invention, which is illustrated partially in transparent form, obliquely from above;
- Figure 2: shows a perspective view of the filter housing of Figure 1 obliquely from below with the filter element removed;
- Figure 3a: shows an enlarged perspective partial view of the filter housing according to the invention of Figure 1 in the region of the partition wall;
- Figure 3b: shows an enlarged perspective partial view of the filter housing according to the invention of Figure 1 with a receptacle for the partition wall;
- Figure 3c: shows a perspective view of the partition wall of the filter housing 1 according to the invention of Figure 1;
- Figure 3d: shows an enlarged perspective partial view of the filter housing according to the invention of Figure 1 with a receptacle for the partition wall;
- Figure 4a: shows a perspective view of the filter element of the filter housing according to the invention of Figure 1 with a rubber pad;
- Figure 4b: shows a perspective view of the filter element of the filter housing according to the invention of Figure 1 with rubber pad and partition wall;
- Figure 5a: shows a sectioned side view of the filter housing according to the invention of Figure 1 in the region of the partition wall;
- Figure 5b: shows a perspective partial view of the locking element of Figure 5a;
- Figure 5c: shows a perspective partial view of the locking element of Figure 5b without the partition wall;
- Figure 5d: shows a perspective partial view of the further locking element of Figure 5a;
- Figure 6a: shows a perspective partial view of a filter housing according to the invention in the region of a further partition wall;
- Figure 6b: shows a perspective partial view of a filter housing according to the invention in the region of yet another partition wall;
- Figure 6c: shows a perspective partial view of the filter housing according to the invention of Figure 6b without a partition wall, and
- Figure 7: shows a perspective view of yet another partition wall.

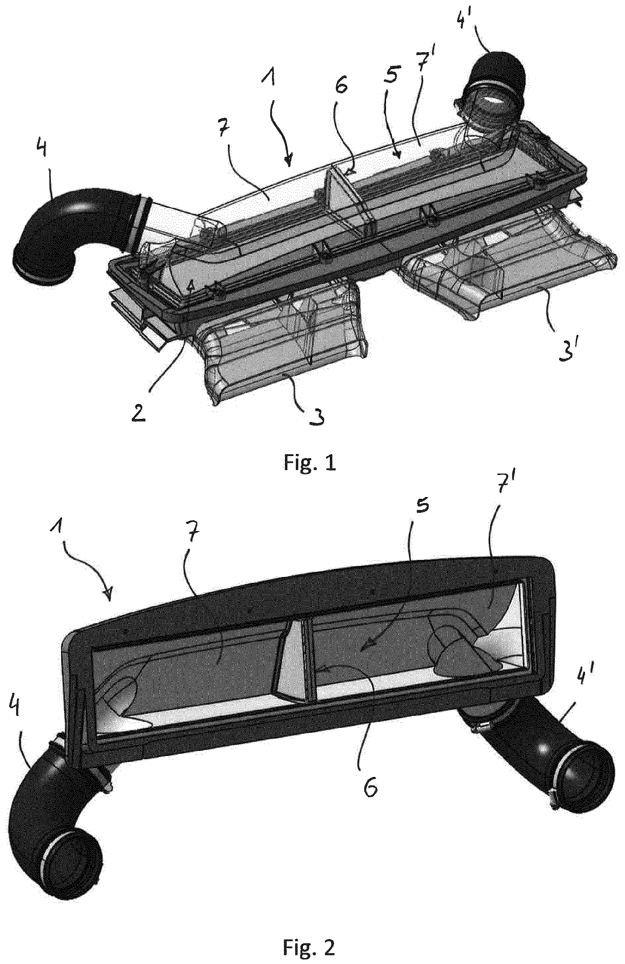

Figure 1 shows a perspective view of a filter housing 1 according to the invention, illustrated in partially transparent form, obliquely from above. Said filter housing 1 has a filter element 2, which is arranged between two raw-air-side air inlets 3, 3' and two clean-air-side air outlets 4, 4' of the filter housing 1. A clean-air space 5 which is overlapped by the filter element 2 communicates here with the clean-air-side air outlets 4, 4' and is divided by a partition wall 6, which is insertable or pushable in retrospectively, into two individual clean-air chambers 7, 7', each of which is assigned to a respective clean-air-side air outlet 4, 4'.

A line thus branches off from each of the clean-air chambers 7, 7' formed by the arrangement of the partition wall 6 to a defined number of cylinders. The cylinders are preferably arranged here in two separate rows or banks, in particular in a V or W arrangement. The one filter element 2 covers the two clean-air chambers 7, 7', with the flow basically also only being able to approach the filter element 2 from a central raw-air line, but two lines arranged in parallel are provided here. In order to ensure an improved manufacturing process of the filter housing 1, the partition wall 6 is insertable into the filter housing 1 and is not manufactured integrally with the filter housing 1. The partition wall 6 is preferably inserted into corresponding receptacles by being pushed therein.

In essence, the invention therefore provides a filter housing 1 with a single filter element 2 and a clean-air space 5 divided into two clean-air chambers 7, 7' which are separated from each other. By means of this division, stable flow conditions can be achieved in the case of cylinder cut-off. This is because the partition wall 6 prevents a transverse air flow through the clean-air space 5 when cylinders are deactivated during operation of the engine, and therefore a MAF sensor signal remains stable. In the state of deactivation of the cylinders, raw air namely cannot pass from the left-side air inlet 3 into the right-side row of cylinders of the air outlet 4', or vice versa. If, by contrast, the partition wall 6 were not arranged in the filter housing 1, air could be sucked up from the right-side air inlet 3' and could flow via the air outlet 4 into the left-side row of cylinders, or vice versa, which influences the MAF signal calibration.

Figure 2 shows a perspective view of the filter housing 1 of Figure 1 obliquely from below with the filter element 2 removed. In particular, the fitted position of the partition wall 6 in the clean-air space 5, which in this example is selected centrally in order to form two clean-air chambers 7, 7' of identical size, can be seen. The partition wall 6 lies here directly against the filter element 2, but is pushed into the filter housing 1 and held there. In particular a subsequently possibly necessary change of filter without removal of the partition wall 6 is therefore possible as customary.

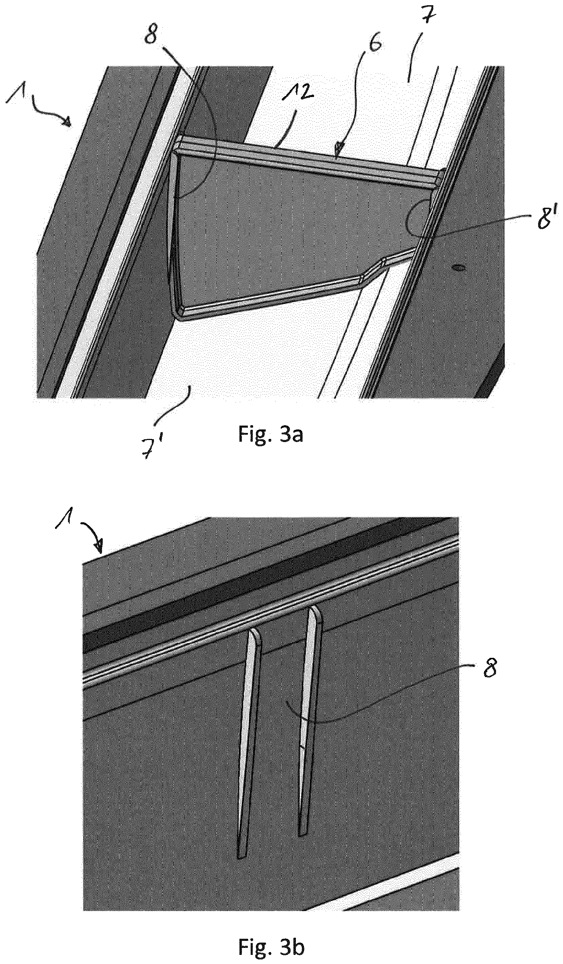

Figure 3a shows an enlarged perspective partial view of the filter housing 1 according to the invention of Figure 1 in the region of the partition wall 6. The latter is held on its left and its right side on the filter housing 1 via receptacles 8, 8'. Said receptacles 8, 8' are designed as holding ribs on both sides which permit the partition wall 6 to be inserted or pushed in from the filter side. For this purpose, the partition wall 6 has an at least partially encircling wider edge 12 which increases the stability of said partition wall against air pressure fluctuations and vibrations.

Figure 3b shows an enlarged perspective partial view of the filter housing 1 according to the invention of Figure 1 with the holding ribs on both sides of the left-side receptacle 8. Said holding ribs are formed higher on the filter side in order to ensure good grasping of the partition wall 6, and taper out into the depth of the filter housing 1.

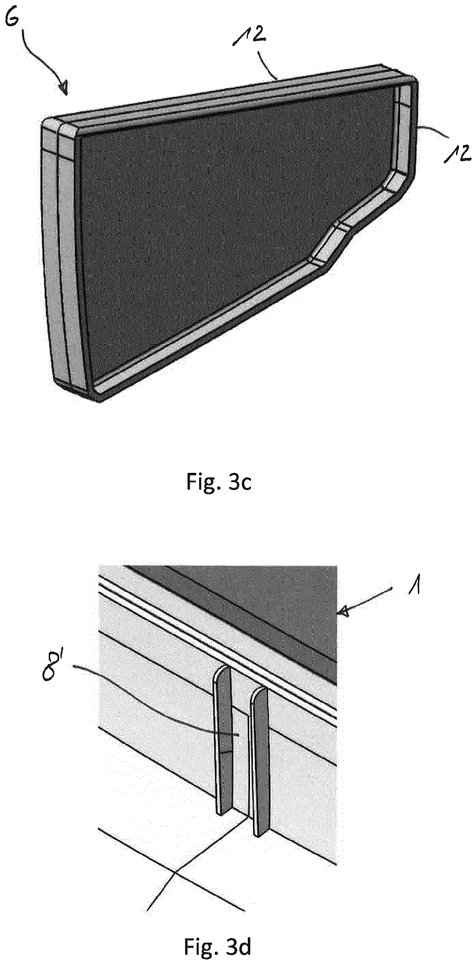

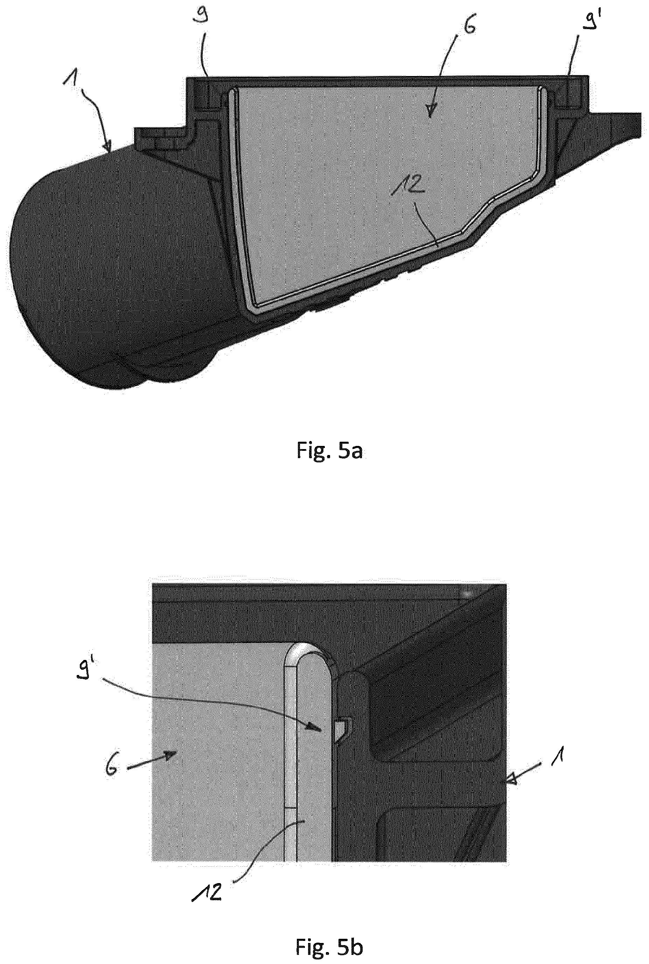

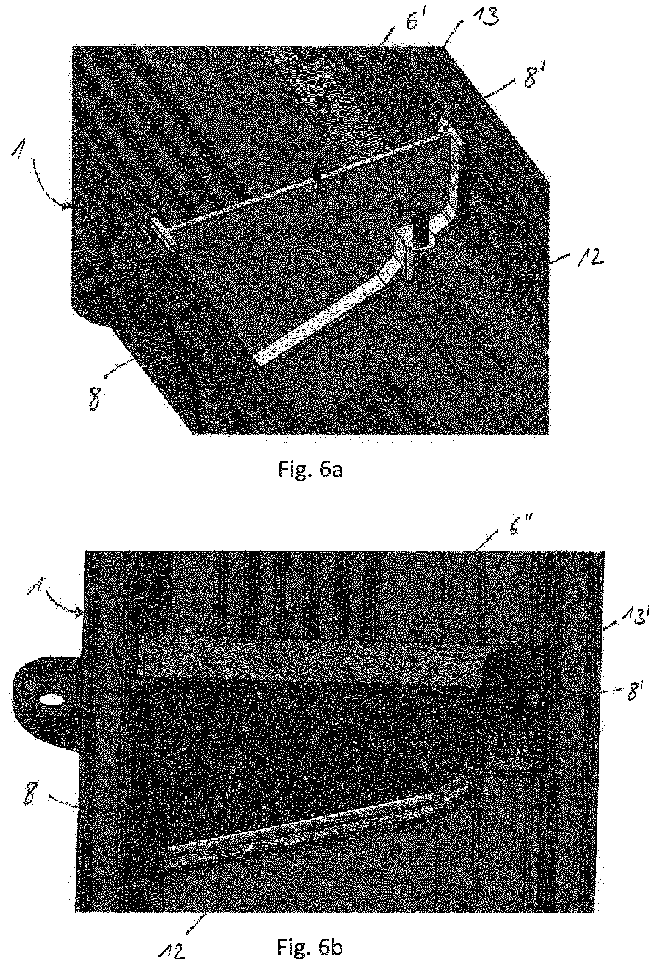

Figure 3c shows a perspective view of the partition wall 6 of the filter housing 1 according to the invention of Figure 1. The relatively wide encircling edge 12 of the partition wall 6 can be seen once again here, said edge 12 guaranteeing the high flexural rigidity and stable holding of the said partition wall in the filter housing 1. In the embodiments of Fig. 1, 2, 3a, 3c, 4b, 6b and 7 said enlarged edge 12 is provided along the complete circumference of the partition wall 6 and therefore totally encircles the partition wall 6. In the embodiments of Fig. 5a, 5b and 6a said enlarged edge 12 is formed to encircle the partition wall 6 only partially. In particular, said enlarged edge 12 leaves out the area which is adapted for establishing contact with the filter element 2 or the respective sealing element 11 discussed more detailed below. In those embodiments the enlarged edge 12 is provided only along areas which are turned away from the filter element 2.

Figure 3d shows an enlarged perspective partial view of the filter housing 1 according to the invention of Figure 1 with a receptacle 8' for the partition wall 6. This right-side receptacle 8' is formed here by holding ribs which are on both sides and are formed with equal height over their length. Particularly good guidance is therefore present at the lower and shorter part of the partition wall 6 in order to insert or push the partition wall 6 into the filter housing 1. The receptacles 8, 8' formed in the manner of ribs on the left side and right side not only ensure a stable positional securing of the partition wall 6, but also seal off the edge 12 thereof at least in sections against transverse air flow.

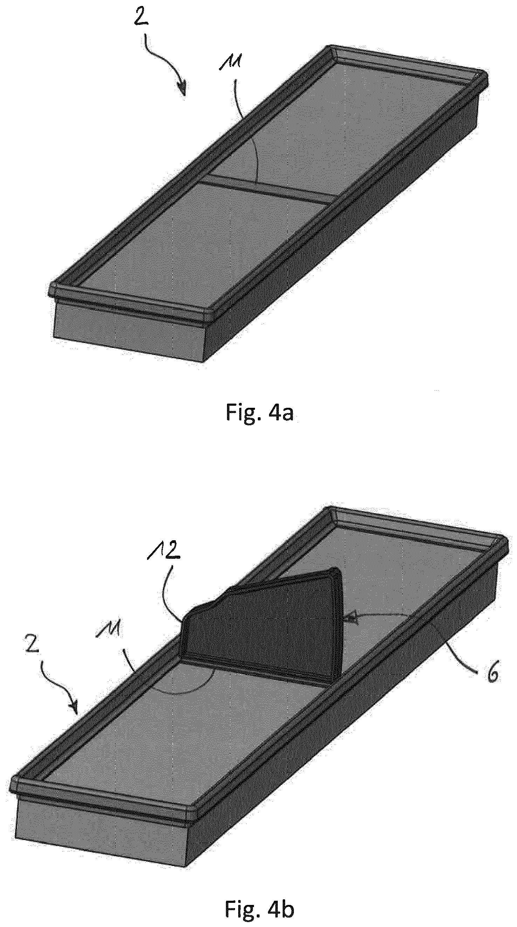

Figure 4a shows a perspective view of the filter element 2 of the filter housing 1 according to the invention of Figure 1 with a rubber seal in the form of a rubber pad 11 which ensures sealing of the partition wall 6 in relation to paper layers of the filter element 2. As a result, a transverse air flow beyond the partition wall 6 specifically does not arise even in the region of the filter element 2, and damage to the filter layers due to possible vibrations of the partition wall 6 and also whistling noises due to air passing there over are reliably eliminated.

Figure 4b shows a perspective view of the filter element 2 of the filter housing 1 according to the invention of Figure 1 with a rubber pad 11 and partition wall 6 placed thereon. Specifically, the wide encircling edge 12 of the partition wall 6 ensures good contact here against the rubber pad 11, the contact also transmitting possible vibrations over a large area without damaging the paper layers of the filter element 2.

Figure 5a shows a sectioned side view of the filter housing 1 according to the invention of Figure 1 in the region of the partition wall 6. Respective left-side and right-side locks 9, 9' on the upper edge 12 of the partition wall 6 can be seen here, the locks ensuring the stable seat of the partition wall in the receptacles 8, 8' (not illustrated here). In particular, the partition wall 6 is thereby kept securely in its position in relation to pressure fluctuations and possibly occurring vibrations.

Figure 5b shows a perspective partial view of the right-side locking element 9' of Figure 5a, said locking element being designed as a groove/hook connection. When the partition wall 6 is inserted or pushed into the filter housing 1, said lock 9' snaps into place in such a manner that the partition wall 6 is no longer able to slide or slip out of the filter housing 1 even in the event of severe vibrations.

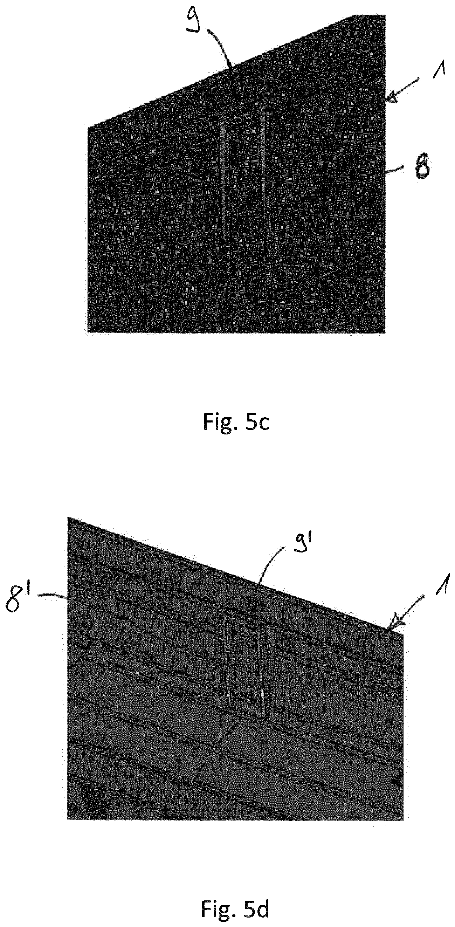

Figure 5c shows a perspective partial view of the locking element 9 together with the receptacle 8 which is formed by two holding ribs which run in parallel and at the end of which the lock 9 is arranged. Simultaneous guidance of the partition wall 6 during the insertion or pushing into the filter housing 1 and secure positioning on the filter housing 1 are therefore possible.

Figure 5d shows a perspective partial view of the further left-side locking element of Figure 5a, said locking element lying in a similar manner to in Figure 5c between holding ribs of the receptacle 8', said holding ribs ensuring reliable guidance of the partition wall 6 up to the locking element 9 during the insertion or pushing in, and at the same time taking on the lateral positional securing thereof.

Figure 6a shows a perspective partial view of a filter housing 1 according to the invention in the region of a further partition wall 6' which is secured in its position on the filter housing 1 with a pin/eye combination 13 before said pin/eye combination 13 is fixedly connected to each other by hot connecting, such as, for example, by hot plugging together or ultrasonic welding.

Figure 6b shows a perspective partial view of a filter housing 1 according to the invention in the region of yet another partition wall 6" which likewise has a pin/eye connection 13' which can be fixedly connected to each other by hot connecting.

Both in Figure 6a and in Figure 6b, the receptacles 8, 8' can be designed, as already described, as holding ribs which ensure that the partition wall 6', 6" is securely inserted or pushed in and guided to the pin/eye combination 13, 13'.

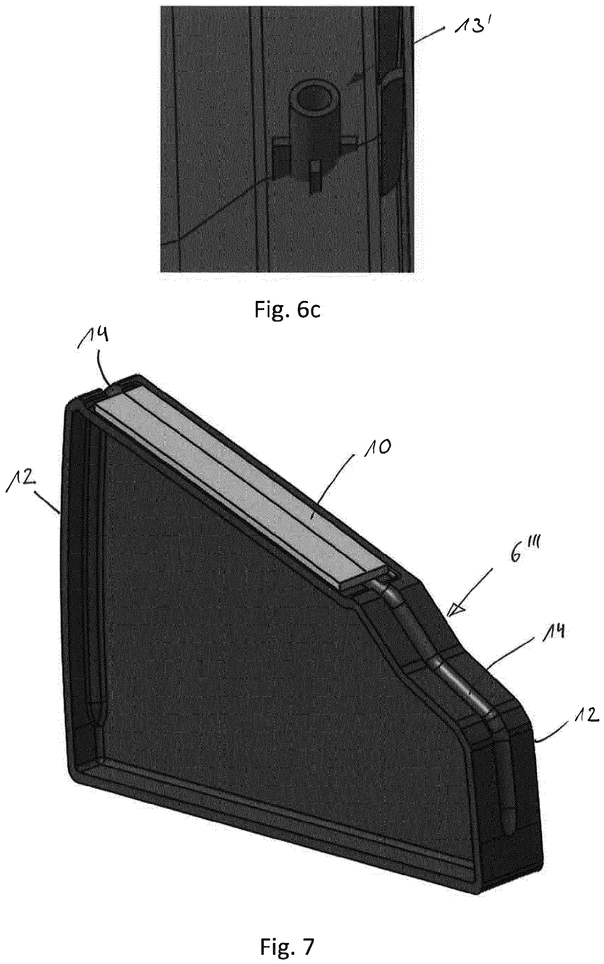

Figure 6c shows the specific design of the pin of the pin/eye combination 13' with web-shaped rests, which are attached radially thereto, for the partition wall 6", said rests forming an abutment for the partition wall 6 during the insertion or pushing in and subsequent hot connecting thereof.

Figure 7 shows a perspective view of yet another partition wall 6"', the wide encircling edge 12 of which is provided at the top with a fixing tape 10 in order to ensure both good sealing and also connection to the filter housing 1. In addition, a groove 14 is provided in order to introduce a further seal which is intended to serve on a front and rear side of the partition wall 6''' for additional sealing in relation to the filter housing 1. As a result, transverse air flows are reliably eliminated, vibrations mitigated and a MAF sensor signal is kept stable even in the case of cylinder cut-off because of the stable flow conditions.

Irrespective of the specific embodiment of the filter housing 1 according to the invention, stable flow conditions are therefore always ensured during every operation of the engine, wherein manufacturing of said filter housing 1 is possible particularly simply by retrospective simple insertion or pushing in of the partition wall 6... 6"'. In addition, possibly occurring vibrations of the filter housing 1 can be reliably absorbed, and in particular a production of noise due to whistling of air can also be eliminated by adequate sealing of the partition wall 6 ... 6"'.

## Claims

1. Filter housing (1) with a filter element (2), which is arranged between at least one raw-air-side air inlet (3, 3') and at least two clean-air-side air outlets (4, 4') of the filter housing (1), and with a clean-air space (5), which overlaps the filter element (2) and communicates with the clean-air-side air outlets (4, 4'), and with at least one partition wall (6; 6'; 6"; 6'''), which is arranged within the clean-air space (5) in such a way that the clean-air space (5) is divided into individual clean-air chambers (7, 7'), at least one of which is assigned to a respective clean-air-side air outlet (4, 4').

2. Filter housing (1) according to Claim 1, **characterized in that**
the at least one partition wall (6; 6'; 6"; 6''') is not manufactured integrally with the filter housing (1) and in particular is insertable or pushable into the filter housing (1).

3. Filter housing (1) according to Claim 1 or 2, **characterized in that**
the filter housing (1) has receptacles (8, 8'), in particular formed by projections and /or recesses for fixing the at least one partition wall (6; 6'; 6"; 6''') in a predetermined position on the filter housing (1).

4. Filter housing (1) according to Claim 3, **characterized in that**
the receptacles are designed as holding ribs and/or holding grooves.

5. Filter housing (1) according to one of the preceding claims, **characterized in that**
intermeshing locking and/or holding elements (9, 9') are formed between the at least one partition wall (6; 6'; 6"; 6"') and the filter housing (1).

6. Filter housing (1) according to Claim 5, **characterized in that**
the locking elements (9, 9') are configured as snap-action securing means.

7. Filter housing (1) according to one of the preceding claims, **characterized in that**
a double sided adhesive fixing tape (10) is arranged between the at least one partition wall (6; 6'; 6"; 6''') and the filter housing (1).

8. Filter housing (1) according to one of the preceding claims, **characterized in that**
the at least one partition wall (6; 6'; 6"; 6''') is heat-connected to the filter housing (1), in particular by ultrasonic welding and/or hot plugging together.

9. Filter housing (1) according to one of the preceding claims, **characterized in that**
the at least one partition wall (6; 6'; 6"; 6''') and/or the filter housing (1) and/or the filter element (2) are/is provided with a rubber seal.

10. Filter housing (1) according to one of the preceding claims, **characterized in that**
a rubber pad (11), in particular composed of polyurethane foam, is introduced between the at least one partition wall (6; 6'; 6"; 6''') and the filter element (2).

11. Filter housing (1) according to one of the preceding claims, **characterized in that**
the at least one partition wall (6; 6'; 6"; 6''') has an encircling edge (12) of T- or L-shaped design, as seen in cross section.

12. Filter housing (1) according to one of the preceding claims, **characterized in that**
the at least one partition wall (6; 6'; 6"; 6''') is produced from a plastic material.

13. Manufacturing method for a filter housing (1) according to one of the preceding claims, in which at least one partition wall (6; 6'; 6"; 6''') is arranged in the clean-air space (5) in such a manner that the clean-air space (5) is divided into individual clean-air chambers (7, 7'), at least one of which is assigned to a respective clean-air-side air outlet (4, 4').

14. Manufacturing method according to Claim 13, in which the at least one partition wall (6; 6'; 6"; 6''') is insertable or pushable into the filter housing (1) and/or is heat-connectable to the filter housing (1).

15. Use of a filter housing (1) according to one of Claims 1 to 12 in a vehicle, preferably in a vehicle with an internal combustion engine.
